# EUROPÄISCHE PATENTANMELDUNG

(11) **EP 2 177 462 A1**
(43) Veröffentlichungstag der Anmeldung: **21.04.2010**
(21) Anmeldenummer: 08018294.2
(22) Anmeldetag: 20.10.2008
(51) Int. Cl.: B65G 57/03

(54) **Vorrichtung zum Palettieren von quaderförmigen Gegenständen im Verbund**

(71) Anmelder: Ruberg, Bernhard, Dipl.-Ing., 33098 Paderborn (DE)
(72) Erfinder: Ruberg, Bernhard, Dipl.-Ing., 33098 Paderborn (DE)

(57) **Zusammenfassung**

Vorrichtung zum Beladen einer Palette (P) mit einem Stapel (S) mehrerer Lagen (L1- LN) von in einem Verbund angeordneten annähernd quaderförmigen Gegenständen (G), wobei auf einem Gestell (1), das von einem Hubstapler (H) mit der Palette (P), auf der der Stapel (S) Platz hat, zu unterfahren ist; auf einem Niveau über der höchsten Lage (LN) eine Rollen-Jalousie (2) angeordnet ist, die auf einer Umlaufbahn (20) oberhalb einer maximalen Lagenhöhe (LH) umläufig zurückgeführt ist und mit einem Umlaufantrieb (21) versehen ist und sich über eine Stapelfläche (SF) entsprechend einer Palettengrundfläche erweitert um eine Rangierfläche (RF) mit mindestens einer maximalen Quaderkantenlänge (QL) erstreckt, und dass seitlich der Rangierfläche (RF) ein Übergabeschieber (3) mit einem Schubantrieb (31) und mit einem Orientierungsantrieb (32) für ein ausgerichtetes Plazieren jeweils eines angeforderten Gegenstandes (G) auf der Rollen-Jalousie (2) angeordnet ist und dass über der Stapelfläche (SF) in ihrer Umlaufrichtrung endseitig derselben ein Abstreiferanschlag (4) angeordnet ist und dass die programmierbare Steuervorrichtung (5; 50; 51; 52) mit den Antrieben (21; 31; 32) sowie einem Absenk- und Hubantrieb (6) des Hubstaplers (H) verbunden sind.

## Beschreibung

Die Erfindung betrifft eine Vorrichtung zum Beladen einer Palette mit einem Stapel mehrer Lagen von in einem Verbund angeordneten annähernd quadratischen Gegenständen.

Es ist bekannt, quaderförmige Gegenstände, z.B. Verpackungskartons, Trays, Schrumpfgebinde, Mehrweg Getränkekästen, Einzelpäckchen usw. schichtweise auf einer Palette zu stapeln, wobei die Gegenstände, die gewöhnlich in den drei Dimensionen unterschiedliche Abmessungen aufweisen, mit unterschiedlichen Orientierungen in der Lage angeordnet werden, sodass sich ein Verbund mit gegenseitigem Halt der Gegenstände ergibt.

Es sind Palettiervorrichtungen bekannt, bei denen mehrachsige Roboter mit speziellen Greiferkonstruktionen eingesetzt werden.

Ferner sind stationäre Palettiervorrichtungen bekannt, bei denen die einzelnen Palettenlagen durch Pusher auf entsprechenden Gleitblechen oder Rollenteppichen gebildet und zusammen mit diesen über die Palette verbracht werden, auf die Übergabehöhe abgesenkt werden und durch seitliches Wegziehen der Gleitbleche oder des Rollenteppichs auf der Palette positioniert werden.

Nachteil beider Systeme sind ein sehr hoher Platzbedarf, ein hoher technischer Aufwand und die ausschließlich stationäre Betriebsweise.

Es ist Aufgabe der Erfindung, eine kompakte, einfach zu bedienende und preiswerte Verbundstapelvorrichtung zu schaffen, die im wesentlichen automatisch arbeitet.

Die Lösung besteht darin, dass auf einem Gestell, das von einem Hubstapler mit der Palette, auf der der Stapel Platz hat, zu unterfahren ist; auf einem Niveau über der höchsten Lage eine Rollen-Jalousie angeordnet ist, die auf einer Umlaufbahn oberhalb einer maximalen Lagenhöhe umläufig zurückgeführt ist und mit einem Umlaufantrieb versehen ist und sich über eine Stapelfläche entsprechend einer Palettengrundfläche erweitert um eine Rangierfläche mit mindestens einer maximalen Quaderkantenlänge erstreckt, und dass seitlich der Rangierfläche ein Übergabeschieber mit einem Schubantrieb und mit einem Orientierungsantrieb für ein ausgerichtetes Plazieren jeweils mindestens eines angeförderten Gegenstandes auf der Rollen-Jalousie angeordnet ist und dass über der Stapelfläche in ihrer Umlaufrichtrung endseitig derselben ein Abstreiferanschlag angeordnet ist und dass die programmierbare Steuervorrichtung mit den Antrieben sowie einem Absenk- und Hubantreib des Hubstaplers verbunden sind.

Vorteilhaft bezieht die Vorrichtung den Hubstapler, der zu An- und Abtransport der Paletten dient in die Stapelvorrichtung beim Beladen der Palette in den Beladevorgang ein, indem das Anheben und das lagenweise Absenken der Palette durch den Hub- und Senkmechanismus des Hubstaplers geschieht.

Dazu wird das Heben und Senken der Hubstaplergabel mittels angepasstem Adapter an der Bedieneinheit des Hubstaplers durch die Steuerung der Vorrichtung betätigt.

Es lassen sich sowohl handbetätigte als auch motorisch betätigte Hubstapler einsetzen.
Bei ersterem ist nur das automatische Absenken der Hubstaplergabel während des Stapelvorganges möglich; das Anheben der Palette auf die oberste Übernahmehöhe erfolgt manuell oder durch einen Fußhebel.

Da ein gerader Stapel nur auf einer horizontal gestellten Palette aufgebaut werden kann, ist es vorgesehen, die Neigung, die eine Palette auf einem Hubstapler gewöhnlich aufweist, durch eine leicht geneigte Ausrichtplattform als Unterlage für den Hubstapler anzuordnen. Wenn mehrere unterschiedlich geneigte Hubstapler im Einsatz sind, ist diese Ausrichtplattform mit einem Verschwenkantrieb, z.B. mit Pneumatikzylindern, versehen, die von der Steuereinrichtung in Verbindung mit einer entsprechenden Abfragesensorik angesteuert werden.

Um das Einfahren des Hubstaplers in die Vorrichtung einfach zu halten und trotzdem einen geraden, auf der Palette zentrierten Stapel zu erzeugen, sind Ausrichtmittel am Gestell angeordnet, die vorzugsweis mit pneumatischen Stellern die Palette unter der Stapelfläche zentrieren, wobei entsprechend orientierte Sensoren die Zentrierung kontrollieren.

Wenn eine quasikontinuierliche Abnahme der auf einem Linearförderer angelieferten Gegenstände erreicht werden soll, wird jeweils ein mit einem kompletten Stapel beladender Hubwagen aus dem Staplergestell ausgefahren und sofort ein bereitgestellter zweiter Hubstapler mit aufgelegter leerer Palette eingefahren und an die Steuerung adaptiert.

Die Vorrichtung, die die Gegenstände lagenweise im Verbund ablegt, besteht im Wesentlichen aus einer Rollen-Jalousie mit einem lagengesteuerten Umlaufantrieb und einem Übergabeschieber mit Schubantrieb, der die Gegenstände nacheinander vom Linearförderer auf eine Stapelfläche der Rollen-Jalousie verbring.

Der Übergabeschieber hat in seiner Grundstellung der Orientierungeine Frontwand und eine dazu rechtwinklig angeordnete Seitenwand, mit denen er die quaderförmigen Gegenstände jeweils an zwei Seiten erfasst.

Für das Stapeln im Verbund , d.h. mit unterschiedlicher Orientierung der Gegenstände in einem platzsparenden Muster werden einige der Gegenstände verdreht abgelagert, wozu der Übergabeschieber entweder unmittelbar mit einem Orientierungsantrieb versehen ist oder letzterer diesem vorgelagert ist.
Der Orientierungsantrieb verdreht die einzelnen Gegenstände winkelgesteuert um eine vertikale Achse abhängig von einem in der Steuervorrichtung hinterlegten Muster.

Damit die vollständige Verbundlage gebildet wird, sind die Bewegung der Rollen-Jalousie, des Schubantriebes und des Orientierungsantriebes untereinander und abhängig vom Eintreffen der zu stapelnden Gegenstände auf dem Linearförderer abgestimmt.

Der Orientierungsantrieb ist vorzugsweise für mindestens eine 180°-Verdrehung der Gegenstände z.B. in zwei 90°-Schritten auseprägt, damit die Gegenstände auch mit einem Label oder einem empfindlichen Verschuß nach aussen oder nach innen gedreht werden können. Die Orientierung wird durch entsprechende Lagesensorik abgefragt.

Um eine die Palette komplett abdeckende Lage der Gegenstände bilden zu können, ist anschließend an die Stapelfläche, die die Palette überdacht, eine Rangierfläche auf der Rollen-Jalousie angeordnet, deren Länge in Palettenlängsrichtung mindestens einer maximalen Quaderlänge des Gegenstandes entspricht.

Jedes Mal, wenn eine vollständige Lage vorgruppiert ist, wird die Rollen-Jalousie unter der Lage weggezogen, während sie von einem Abstreiferanschlag zurückgehalten wird, der sich über die gesamte Schmalseit der Palette erstreckt.

Sobald eine Lage vollständig abgelegt ist, löst die Steuervorrichtung einen Senkvorgang bei dem Hubstapler aus, so dass diese Lage nahe unter der Rollen-Jalousie zum Stehen kommt.

Ist die letzte Lage abgelegt, erfolgt eine Signalabgabe an den Bediener des Hubwagens.

Bereits zu diesem Zeitpunkt beginnt die Zusammenstellung einer ersten Lage für einen weiteren Stapel einer nächsten Palette.

Die Gesamtvorrichtung ist kompakt und leicht ausgefertigt, so dass sie mittels Hubstapler verfahren werden kann.

Zur Anpassung der Vorrichtung an individuelle Einzelanwendungen mit niedrigeren Stapelhöhen kann das Ständerwerk mit höhenverstellbar ausgebildet werden.

Zur Stabilisierung des Stapels auf der Palette und / oder zum Schutz empfindlicher Gegenstände können zwischen den einzelnen Lagen flache Materialien aus Pappe oder Kunststoff abgelegt werden. Hierzu wird eine geeignete Greifvorrichtung unterhalb des Rollen-Jalousieanfangs angeordnet, die eine vorbereitete Zwischenlage auf der zuletzt abgelegten Palettenlage ablegt, bevor die nächste Palettenlage abgelegt wird.
Fig. 1 zeigt die Vorrichtung in der Seitenansicht mit eingefahrenem Hubstapler und belegter Palette in Grundstellung und der leeren Palette in der oberen Endlage des Hubstaplers,
Fig. 2 zeigt die Vorrichtung in der Frontansicht ebenfalls mit zwei Hubstellungen,
Fig. 3 zeigt die Vorrichtung im Schnitt III- III,
Fig. 4 zeigt eine Draufsicht auf die Rollen-Jalousie; Schnitt IV -IV,
Fig. 5 zeigt den Umlauf der Rollen-Jalousie im vertikalen Längsschnitt.

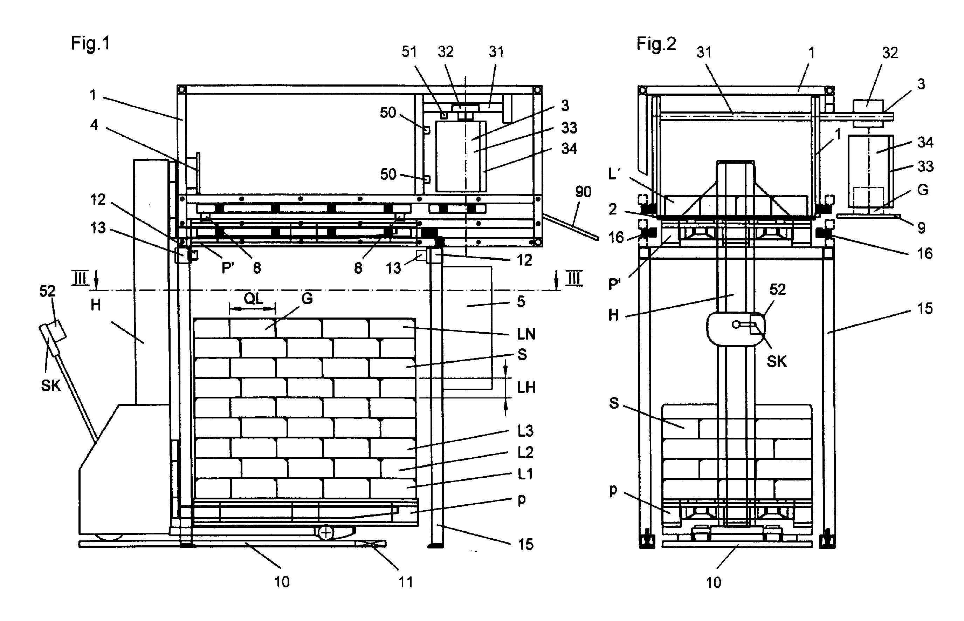

Fig. 1 zeigt ein Übersichtsbild der Stapelvorrichtung, wobei der Hubstapler H mit seinen Gabeln und einer aufgenommenen Palette P,P' in zei Hublagen dargestellt ist. In der oberen Beladestellung ist die Palette P' parallel zur Stapelfläche gehalten, die hier nicht dargestellt ist.
Die Parallelität wird durch Parallelitätssensoren 8 in Verbindung mit der Steuervorrichtung 5 über einen Verschwenkantrieb 11 an der Ausrichtplattform 10, die unter dem Fahrwerk des Hubstaplers H liegt, hergestellt. Diese Ausrichtplattform 10 befindet sich unter einem Stapelraum des Gestells 1, das sich über diesen erstreckt. Vorteilhafterweise sind auch Neigungsmittel 12 mit einem Neigeantrieb 13 an den Ständern 15 vorgesehen.Sie können alternativ zur Funktionsweise der Ausrichtplattform 10 in Verbindung mit den Paralielitätssensoren 8 betätigt werden.
Die Palette P, die in der unteren Hublage dargestellt ist, trägt einen Stapel S aus mehreren Lagen L1, L2, L3 ...... LN von im Verbund gestapelten Gegenständen G.
Das Gestell 1 hat vorzugsweise längenverstellbare Ständer 15, damit es an gegebene Raumverhältnisse und Stapelhöhen angepasst werden kann.

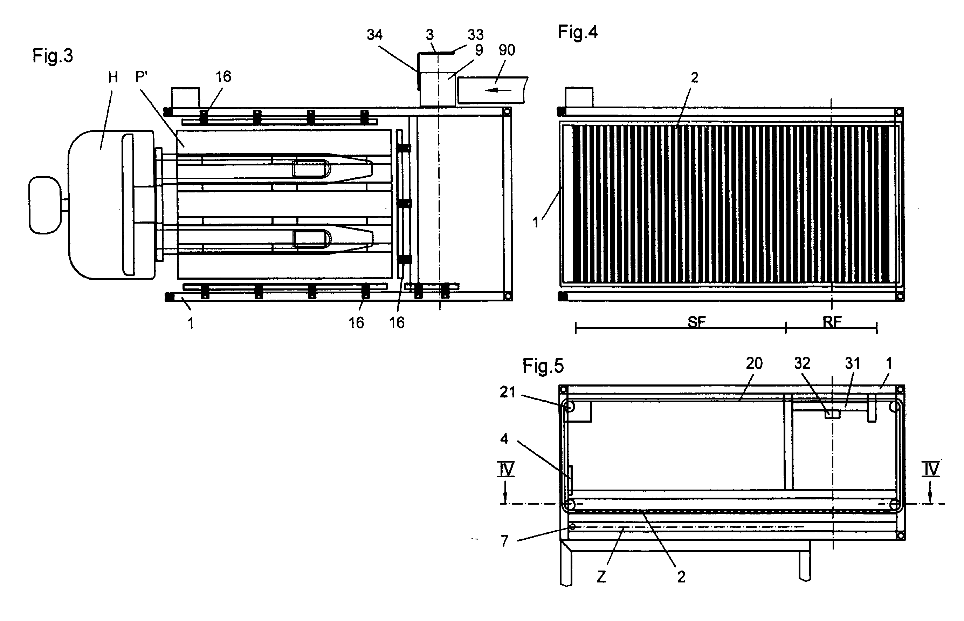

Im oberen Gestellbereich ist ein Übergabeschieber 3 mit dem Schubantrieb 31 und einem Orientierungsantrieb 32 gezeigt. Der Übergabeschieber weist im rechten Winkel zueinander stehend eine Frontwand 33 und eines Seitenwand 34 auf.
Der Schubantrieb 31 ist in die Tiefe der Abbildung gerichtet.
Der Orientierungsantrieb 32 verschwenkt den Übergabeschieber 3 um eine vertikale Achse; ein Verschwenkwinkel von 180° ist vorteilhaft.
Die beiden Antriebe 31 und 32 sind positionsgesteuert von der Steuervorrichtung 5 angetrieben, wobei Orientierungssensoren 51 und Lagesensoren 50, die hier beispielhaft hezeigt sind, die Lage eines jeweils zu plazierenden Gegenstandes melden.
Die Gegenstände werden hier einzeln z.B. von einem Linearförderer 90 auf die Abschiebeposition der Übergabebühne gefördert, wo sie von dem Übergabeschieber mittels Front- 33 und/oder Seitenwand 34 auf die Stapel- und Rangierfläche SF, RF geschoben werden, die in den Figuren 4 und 5 gezeigt werden.
Hubstapler weisen gewöhnlich in ihrer Deichsel einen Steuerkopf SK auf, durch den die Funktionen Heben und Senken aktiviert werden können.
Dieser Steuerkopf SK ist hier mit einem Adapter 52 versehen, der es ermöglicht, die Hub- und Senkfunktion von der Steuervorrichtung 5 aus zu betätigen.

Jedes mal, wenn eine Lage durch die Rollen-Jalousie 2 in Fig. 2 auf die Palette P oder die letzte Lage LN auf die Palette übergeben wurde, wird die Palette P' um eine Lagenhöhe LH angesenkt. Die exakte Höhenabtastung erfolgt mittels geeigneter Sensorik.
Wenn die gewünschte Anzahl von Palettenlagen auf der Palette abgelegt wurden, wird die Palette auf die Entnahmehöhe abgesenkt. Während die belegte Palette nun aus der Vorrichtung herausgefahren wird und anschließend wieder eine leere Palette mittels Hubstapler H in die Vorrichtung eingebracht wird, wird mittels des Übergabeschiebers 3 und Rollen-Jalousie 2 eine neue Palettenlage gebildet. Durch lagenweise versetzt angeordente Gegenstände und/oder unterschiedliche Orientierung der Gegenstände stabilisiert sich der Stapel aus Gegenständen G auf der Palette P in bekannter Weise, wie Fig. 1 und 2 zeigen.

Fig. 2 zeigt die Frontalansicht der Vorrichtung, bei der der Übergabeschieber 3 mit seinen Antrieben 31, 32 in der Startposition eines Abschiebevorganges eines Gegenstandes G von der Übergabebühne 9 auf die Rollen-Jalousie. Die Abgabe der Gegenstände G auf die Übergabebühne 9 erfolgt beispielsweise durch Linearförderer, Schrägförderer oder Vertikalförderer.
Ferner zeigt Fig.2 eine Palette P' in der Übernahmeposition unter der Rollen-Jalousie 2 sowie eine Palette P in der unteren Endlage des Hubstaplers mit einer Stapeibelegung aus mehreren Lagen von Gegenständen G.
Zur Zentrierung der Palette P' unter der Rollen-Jalousie 2 sind seitlich von ebendieser in der Übergabeposition unter der Rollen-Jalousie 2 Ausrichtmittel 16 vorgesehen, die vor jeder Lagenübergabe aktiviert werden; Fig. 3.
Die Lage L' der Gegenstände G wird auf einer Rollen-Jalousie 2 zusammengestellt, die in den Figuren 4 und 5 genauer gezeigt werden.
Der Schnitt IV -IV zeigt die Rollen-Jalousie 2 in ihrer Beladestellung.
Neben der über der Palette zentrierten Stapelfläche SF befindet sich noch ein Rangierfläche RF der Rollen-Jalousie 2, deren Breite mindestens einer Quaderlage QL entspricht.

Fig. 5 zeigt einen Längsschnitt durch Fig.4 mit einer Umlaufbahn 20 der Rollen-Jalousie 2, auf der sie über der zu erstellenden Gegenstandslage zurückgeführt wird.
Die Rollen-Jalousie wird von einem Umlauftrieb 21 reversierbar und lagegeregelt angetrieben.
Durch reproduzierbaren Bewegungen der Rollen-Jalousie 2 und des Übergabeschiebers 3 lassen sich unterschiedliche Muster der Gegenstände darstellen.
Wenn eine Lage vollständig gebildet ist, zieht der Umlauftrieb 21 die Rollen-Jalousie 2 unter dieser weg, wobei sie an dem Abstreiferanschlag 4 abgefangen und passgenau auf der Palette P' bzw. dem Stapel abgesetzt wird.

Zwischenlagen Z werden auf einer Palettenlage abgelegt, indem sie durch geeignet Halter H am Anfang der Rollen-Jalousie 2 über die Palettenlage gezogen werden und durch einen Steuerimpuls vom Halter gelöst werden sobald dieser den Anfang der Palette P oder der oberen Palettenlage erreicht hat.

### Bezugszeichenliste

1 Gestell
10 Ausrichtplattform
11 Verschwenkantrieb zu 10
12 Neigemittel
13 Neigeantrieb zu 12
15 Ständerwerk höhenverstellbar
16 Ausrichtmittel für P / SF
2 Rollen-Jalousie
20 Umlaufbahn
21 Umlauftrieb
3 Übergabeschieber
31 Schubantrieb
32 Orientierungsantrieb
33 Frontwand
34 Seitenwand
4 Abstreiferanschlag
5 Steuervorrichtung
50, 51 Orientierungs- und/oder Lagesensor für G
52 Betätigungsadapter von SK
7 Halter
8 Parallelitätssensor 2 / LN
9 Übergabebühne
90 Linearförderer
G Gegenstände Quaderförmig
H Hubstapler
L1 - LN Lagen, Verbundlagen L'
S Stapel
P Palette,m P'
LH Lagenhöhe
SF Stapelfläche
RF Rangierfläche
QL Quaderlänge
Z Zwischenlage
SK Steuerkopf von H

## Patentansprüche

1. Vorrichtung zum Beladen einer Palette (P) mit einem Stapel (S) mehrerer Lagen (L1- LN) von in einem Verbund angeordneten annähernd quaderförmigen Gegenständen (G),
**dadurch gekennzeichnet,**
**dass** auf einem Gestell (1), das von einem Hubstapler (H) mit der Palette (P), auf der der Stapel (S) Platz hat, zu unterfahren ist; auf einem Niveau über der höchsten Lage (LN) eine Rollen-Jalousie (2) angeordnet ist, die auf einer Umlaufbahn (20) oberhalb einer maximalen Lagenhöhe (LH) umläufig zurückgeführt ist und mit einem Umlaufantrieb (21) versehen ist und sich über eine Stapelfläche (SF) entsprechend einer Palettengrundfläche erweitert um eine Rangierfläche (RF) mit mindestens einer maximalen Quaderkantenlänge (QL) erstreckt, und dass seitlich der Rangierfläche (RF) ein Übergabeschieber (3) mit einem Schubantrieb (31) und mit einem Orientierungsantrieb (32) für ein ausgerichtetes Plazieren jeweils eines angeförderten Gegenstandes (G) auf der Rollen-Jalousie (2) angeordnet ist und dass über der Stapelfläche (SF) in ihrer Umlaufrichtrung endseitig derselben ein Abstreiferanschlag (4) angeordnet ist und dass die programmierbare Steuervorrichtung (5; 50; 51; 52) mit den Antrieben (21; 31; 32) sowie einem Absenk- und Hubantrieb (6) des Hubstaplers (H) verbunden sind.

2. Vorrichtung nach Anspruch 1,
**dadurch gekennzeichnet,**
**dass** die Staplergabeln und die Rollen-Jalousie 2 parallel zueinander ausgerichtet werden, indem der Hubstapler (H) durch eine bodenseitige, verschwenkbare Ausrichtplattform (10) und/oder die Rollen-Jalousie (2) durch ein Neigemittel (12) mit einem Neigeantrieb (13) im Gestell 1 geneigt werden.

3. Vorrichtung nach Anspruch 1,
**dadurch gekennzeichnet,**
**dass** das Gestell (1) höhenverstellbar ist.

4. Vorrichtung nach den vorstehenden Ansprüchen,
**dadurch gekennzeichnet,**
**dass** in dem Gestell (1) seitlich der Palette (P) Ausrichtungsmittel (16) angeordnet sind, die eine definierte Palettenlage unter der Stapelfläche (SF) der Rollen-Jalousie (2) herstellen.

5. Vorrichtung nach den vorstehenden Ansprüchen,
**dadurch gekennzeichnet,**
**dass** unten an der Rollen-Jalousie (2) Halter (7) für eine Zwischenlage (Z) angeordnet sind, die jeweils nur während sie sich über einer Lage (LN) befinden, wirksam gesteuert sind.

6. Vorrichtung nach Anspruch 1,
**dadurch gekennzeichnet,**
**dass** der Übergabeschieber (30) eine Frontwand (33) und eine Seitenwand (34) aufweist, die in einer Grundstellung jeweils parallel zum Abstreiferanschlag (4) ausgerichtet sind und deren Abmessungen jeweils etwas kleiner als die Abmessungen des zu verschiebenden Gegenstandes (G) sind.

7. Vorrichtung nach den vorstehenden Ansprüchen,
**dadurch gekennzeichnet,**
**dass** der Schubantrieb (31) den Übergabeschieber (3) lagegesteuert über eine Übergabebühne (9), die neben der Rollen- Jalousie (3) auf gleichem Niveau angeordnet ist, und quer Über die Rollen-Jalousie (2) bewegt.

8. Vorrichtung nach Anspruch 7,
**dadurch gekennzeichnet,**
**dass** der Orientierungsantrieb (32) den Übergabeschieber (3) oder die Übergabebühne (9), winkelgesteuert um eine senkrechte Achse bewegt.

9. Vorrichtung nach Anspruch 7 oder 8,
**dadurch gekennzeichnet,**
**dass** der Übergabebühne (9) ein Linearförderer (90) für die Gegenstände (G) vorgeschaltet ist oder in dieser integriert ist.

10. Vorrichtung nach Anspruch 9,
**dadurch gekennzeichnet,**
**dass** der Linearförderer (90) ein Schrägförderer, ein Hubförderer oder ein Patemoster-Förderer ist.

11. Vorrichtung nach einem der vorstehenden Ansprüche,
**dadurch gekennzeichnet,**
**dass** an die Steuervorrichtung (S) ein Adapter (52) angeschlossen ist, der Betätigungsmittel für die Ansteuerung der Hub-und/oder Senkbewegung des Hubstaplers (H) enthält.

12. Vorrichtung nach den vorstehenden Ansprüchen,
**dadurch gekennzeichnet,**
**dass** sie durch den Hubwagen (H) verfahren und umgestellt werden kann.

13. Verfahren zur Steuerung einer Beladevorrichtung von Paletten (P), insbesondere nach einem der Ansprüche 1-12,
**dadurch gekennzeichnet,**
**dass** linear angeförderte, annähernd quaderförmige Gegenstände (G) nacheinander entsprechend einer vorgegebenen Anordnung in einen zu bildenden Verbund orientiert auf eine Rollen-Jalousie (2) von der Seite aufgeschoben werden, die über von der Gabel eines Hubstaplers (H) in einer maximalen Höhe eines auf der Palette (P) zu bildenden Stapels (S) aus Verbundlagen der Gegenstände (G) angeordnet ist und dass der Hubstapler (H) jeweils derart höhengesteuert positioniert ist, dass die leere Palette (P) oder die jeweils tiefere Lage (L1 bis LN-1) sich gering beabstandet unter der Rollen-Jalousie (2) befindet, und dass die Rollen-Jalousie (2) derart korreliert zum Orientieren und zum Aufschieben der Gegenstände (G) angetrieben ist, dass der vorgegebene Verbund aus den Gegenständen (G) in den Lagen (L1 bis LN) entsteht und jeweils nach der vollständigen Bildung einer Lage (L1 bis LN) die Rollen-Jalousie (2) unter dieser weggezogen wird, wobei diese Lage (L1 bis LN) jeweils von einem Abstreifer-Anschlag (4) zurückgehalten wird.

14. Verfahren nach Anspruch 13,
**dadurch gekennzeichnet,**
**dass** die Rollen-Jalousie (2) umlaufend oberhalb der zuletzt gebildeten Lage (LN) zurückgeführt wird.

15. Verfahren nach Anspruch 13,
**dadurch gekennzeichnet,**
**dass** die leere Palette (P) beim Anheben durch den Hubstapler (H) horizontal jeweils definiert unter einer Stapelfläche (SF) der Rollen-Jalousie (2) positioniert wird und zu dieser parallel gering beabstandet plaziert wird.
